# EUROPEAN PATENT APPLICATION

(11) **EP 4 755 963 A1**
(43) Date of publication of application: **10.06.2026**
(21) Application number: 24851787.2
(22) Date of filing: 02.08.2024
(51) Int. Cl.: C08J 11/10

(54) **METHOD FOR DECOMPOSING CROSSLINKED RUBBER**

(30) Priority: 04.08.2023 JP 2023128072
(71) Applicant: BRIDGESTONE CORPORATION, Chuo-ku Tokyo 104-8340 (JP); Tohoku University, Sendai-shi, Miyagi 980-8577 (JP)
(72) Inventor: HOJO Masahiro, Tokyo 104-8340 (JP); HOMMA Masahiro, Tokyo 104-8340 (JP); TAHARA Seiichi, Tokyo 104-8340 (JP); YOSHIOKA Toshiaki, Sendai-shi, Miyagi 980-8577 (JP); KUMAGAI Shogo, Sendai-shi, Miyagi 980-8577 (JP)
(74) Representative: Marks & Clerk LLP
(86) International application number: PCT/JP2024/027802
(87) International publication number: WO 2025/033362

(57) **Abstract**

With the aim of providing a method for decomposing crosslinked rubber capable of yielding a diene-based monomer at a high yield, a method for decomposing crosslinked rubber includes a first decomposition step of decomposing crosslinked rubber containing diene rubber in a solvent, and a second decomposition step of thermally decomposing a decomposition product obtained in the first decomposition step at 600°C to 950°C under an inert gas atmosphere and in the absence of a catalyst. The solvent in the first decomposition step is preferably at least one selected from the group consisting of toluene, xylene, cyclohexane, and butyl acetate.

## Description

### TECHNICAL FIELD

The present disclosure relates to a method for decomposing crosslinked rubber.

### BACKGROUND

Conventionally, rubber products using crosslinked rubber such as vulcanized rubber as a main material are difficult to reuse, and after the end of their product life, they are often reused as fuel, particularly in cement plants and the like. However, in recent years, with the growing concern for environmental issues, there is a demand for the development of methods for reusing materials obtained by decomposing rubber products, rather than incinerating rubber products as fuel.

There are various methods for decomposing crosslinked rubber, and for example, techniques for thermally decomposing crosslinked rubber at high temperatures are known. In addition, PTL 1 below discloses a method for decomposing polyisoprene-based rubber using microorganisms.

### CITATION LIST

### Patent Literature

PTL 1: JP 2009-247241 A

### SUMMARY

### (Technical Problem)

As described above, there are various methods for decomposing crosslinked rubber, but from the viewpoint of further improving the recyclability of crosslinked rubber, it is important to increase the yield of monomers obtained by decomposition, particularly diene-based monomers.

However, as described above, when crosslinked rubber is thermally decomposed at high temperatures, the decomposition products tend to be gasified or aromatized, and not only is it difficult to sufficiently increase the yield of diene-based monomers, but also carbonization reactions proceed, resulting in the formation of a carbonized layer on the surface of carbon black as char, which reduces the reinforcing properties of carbon black during recycling. Furthermore, when crosslinked rubber is decomposed using microorganisms as in the technique disclosed in PTL 1 above, there are issues in that the decomposition takes a long time and the yield of diene-based monomers is low.

Therefore, the present disclosure aims to provide a method for decomposing crosslinked rubber that enables obtaining diene-based monomers at a high yield while maintaining the skeleton of the constituent monomers of diene rubber.

### (Solution to Problem)

The gist configuration of the method for decomposing crosslinked rubber of the present disclosure that solves the above problems is as follows.
[1] A method for decomposing crosslinked rubber, comprising:
   a first decomposition step of decomposing crosslinked rubber containing diene rubber in a solvent; and
   a second decomposition step of thermally decomposing a decomposition product obtained in the first decomposition step at 600°C to 950°C under an inert gas atmosphere and in the absence of a catalyst.
[2] The method for decomposing crosslinked rubber according to [1], wherein the solvent in the first decomposition step is at least one selected from the group consisting of toluene, xylene, cyclohexane, and butyl acetate.
[3] The method for decomposing crosslinked rubber according to [1] or [2], wherein a decomposition temperature in the first decomposition step is 150°C to 300°C.
[4] The method for decomposing crosslinked rubber according to any one of [1] to [3], wherein a decomposition time in the first decomposition step is 1 hour to 48 hours.

### (Advantageous Effect)

According to the present disclosure, it is possible to provide a method for decomposing crosslinked rubber that enables obtaining diene-based monomers at a high yield while maintaining the skeleton of the constituent monomers of diene rubber contained in the crosslinked rubber.

### DETAILED DESCRIPTION

Hereinafter, the method for decomposing crosslinked rubber according to the present disclosure will be exemplified and described in detail based on its embodiment.

### [Definitions]

The compounds described in the present specification may be partially or entirely derived from fossil resources, derived from biological resources such as plant resources, or derived from recycled resources such as used tires. Furthermore, they may be derived from a mixture of any two or more of fossil resources, biological resources, and recycled resources.

### [Method for Decomposing Crosslinked Rubber]

The method for decomposing crosslinked rubber according to the present embodiment is characterized by including:
a first decomposition step of decomposing crosslinked rubber containing diene rubber in a solvent; and
a second decomposition step of thermally decomposing a decomposition product obtained in the first decomposition step at 600°C to 950°C under an inert gas atmosphere and in the absence of a catalyst.

In the method for decomposing crosslinked rubber according to the present embodiment, in the first decomposition step, crosslinked rubber containing diene rubber is decomposed in a solvent. By swelling the crosslinked rubber in the solvent and decomposing the crosslinked rubber under solvent-swollen conditions, it is possible to suppress gasification and aromatization of the decomposition product, and, compared to conventional high-temperature thermal decomposition, to obtain a decomposition product (intermediate decomposition product: liquid polymer) with a higher retention rate of the skeleton of the constituent monomers of the diene rubber (isoprene skeleton, butadiene skeleton, etc.).

Furthermore, in the method for decomposing crosslinked rubber according to the present embodiment, in the second decomposition step, by thermally decomposing the decomposition product obtained in the first decomposition step at 600°C to 950°C under an inert gas atmosphere and in the absence of a catalyst, it is possible to decompose the intermediate decomposition product (liquid polymer) into diene-based monomers while suppressing hydrogenation of the double bonds in the monomer skeleton and oxidation of the intermediate decomposition product (liquid polymer).

Accordingly, according to the method for decomposing crosslinked rubber of the present embodiment, it is possible to maintain the skeleton of the constituent monomers of the diene rubber contained in the crosslinked rubber and improve the yield of diene-based monomers ultimately obtained from the crosslinked rubber.

### <First Decomposition Step>

The method for decomposing crosslinked rubber according to the present embodiment includes a first decomposition step of decomposing crosslinked rubber containing diene rubber in a solvent.

### (Crosslinked Rubber)

The crosslinked rubber to be decomposed in the decomposition method of the present embodiment contains diene rubber and may further contain carbon black or the like.

Regarding the crosslinked rubber used for decomposition, it is possible to group them in advance according to the type of diene rubber blended, and then carry out the decomposition process for each group. Alternatively, it is possible to group them in advance according to the type of filler blended (for example, type of carbon black, type of silica, mixing ratio of carbon black and silica, etc.) and then carry out the decomposition process for each group. Furthermore, it is also possible to perform both grouping by type of diene rubber and grouping by type of filler, and then carry out the decomposition process for each group. When the decomposition process is performed for each group in this way, it is possible to obtain liquid polymer, recovered carbon black, recovered silica, etc. with more uniform physical properties, and when these are blended again into a rubber composition, a rubber composition with better performance can be obtained.

In addition, when the crosslinked rubber used for decomposition is derived from tires, it is possible to group them in advance by tire type (for example, for passenger vehicles, for trucks and buses, for large vehicles such as off-road vehicles, for aircraft, for agricultural vehicles, etc.) and then carry out the decomposition process for each group. Alternatively, it is possible to group them in advance by tire component (for example, tread rubber, sidewall rubber, bead portion rubber, steel cord coating rubber, organic fiber coating rubber, pad rubber, cushion rubber, etc.) and then carry out the decomposition process for each group. Furthermore, it is also possible to perform both grouping by tire type and grouping by tire component, and then carry out the decomposition process for each group. When the decomposition process is performed for each group in this way, it is possible to obtain liquid polymer and recovered carbon black with more uniform physical properties, and when these are blended again into a rubber composition, a rubber composition with better performance can be obtained.

The form of the crosslinked rubber is not particularly limited and may be, for example, powdered rubber or the like. Such powdered rubber can be obtained by cutting and pulverizing used rubber products such as waste tires. The pulverization process may include multiple steps such as a preliminary pulverization step and a fine pulverization step, and after the pulverization process, a classification step may be performed to adjust the particle size of the powdered rubber to be used.

The crosslinked rubber may be waste rubber subjected to recycling, used rubber products, or the like. Waste rubber is not limited to that generated from rubber products, but refers to all discarded rubber including unnecessary scraps generated during the production or repair of rubber products. Examples of scraps include, for example, buffing dust and peeling rubber. Buffing dust is, for example, fine rubber generated in the buffing process in tire retreading, where the tread portion remaining on the base tire is shaved off. Peeling rubber is, for example, long rubber strips with a width of 1 to 2 cm peeled from the surface of rubber products such as tires. Peeling rubber is generated by shaving the surface of rubber products such as tires using a knife with a U-shaped or V-shaped tip as a peeler. Rubber products include, for example, final products such as tires and rubber hoses, as well as rubber components or parts at the manufacturing stage of final products. Used tires may be those subjected to retreading, or may be waste tires generated due to tire replacement, scrapping of vehicles, or the like, as well as ELT (End-of-Life Tire) that have reached the end of their service life as tires, or any tires discarded for any reason.

### -Diene Rubber-

The diene rubber is rubber containing units (diene units) derived from diene-based monomers, and may further contain units derived from copolymerizable comonomers.

The units derived from diene-based monomers enable crosslinking (vulcanization) of the diene rubber and impart elongation and strength characteristic of rubber. In the crosslinked rubber, the diene rubber is usually present in a crosslinked state, but a part thereof may be uncrosslinked. Specific examples of diene-based monomers (diene compounds) include 1,3-butadiene, isoprene, 1,3-pentadiene, 2,3-dimethyl-1,3-butadiene, and the like; among these, 1,3-butadiene and isoprene are preferred, and isoprene is particularly preferred.

On the other hand, examples of the copolymerizable comonomer include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Examples of the diene rubber include isoprene skeleton rubber, styrene-butadiene rubber (SBR), butadiene rubber (BR), chloroprene rubber (CR), and the like. Here, isoprene skeleton rubber refers to rubber having an isoprene unit as the main skeleton, and specific examples include natural rubber (NR), synthetic isoprene rubber (IR), and the like. Among these, it is preferable that the diene rubber contains at least one selected from the group consisting of isoprene skeleton rubber, styrene-butadiene rubber, and butadiene rubber, with isoprene skeleton rubber being particularly preferred. When the diene rubber contains at least one selected from the group consisting of isoprene skeleton rubber, styrene-butadiene rubber, and butadiene rubber, it is possible, by decomposing the crosslinked rubber, to obtain a liquid polymer containing a diene-based monomer such as isoprene or butadiene as the skeleton, together with recovered carbon black, which is easy to reuse.

Further, when the crosslinked rubber contains both isoprene skeleton rubber and butadiene rubber as the diene rubber, the proportion of butadiene rubber in the total amount of isoprene skeleton rubber and butadiene rubber is preferably 50 mass% or less. When the proportion of butadiene rubber in the total amount of isoprene skeleton rubber and butadiene rubber is 50 mass% or less, it is possible to suppress gelation in the first decomposition step and obtain a decomposition product (liquid polymer) with a high isoprene skeleton retention rate.

When the crosslinked rubber contains butadiene rubber as the diene rubber, particularly when the proportion of butadiene rubber in the diene rubber exceeds 50 mass%, it is preferable to use an antioxidizing agent, decomposition accelerator, or the like to prevent re-crosslinking.

The content of the diene rubber in the crosslinked rubber is not particularly limited, and is preferably in the range of, for example, 10 to 100 mass%, and more preferably in the range of 30 to 100 mass% from the viewpoint of further improving the yield of liquid polymer containing a diene-based monomer as the skeleton and butadiene or isoprene.

### -Carbon Black-

The crosslinked rubber may further contain carbon black. The carbon black is not particularly limited, and examples of the grade of carbon black include N134, N110, N220, N234, N219, N339, N330, N326, N351, N550, N762, and the like.

In the method for decomposing crosslinked rubber according to the present embodiment, in the first decomposition step, the diene rubber in the crosslinked rubber can be decomposed and reduced to a low molecular weight, for example, to a liquid polymer. Therefore, even if the crosslinked rubber contains carbon black, after the first decomposition step, the carbon black can be easily separated and recovered by, for example, centrifugation or filtration. By recovering the carbon black before the thermal decomposition in the second decomposition step, it is possible to avoid deterioration of the carbon black and reuse it as high-quality carbon black.

The content of carbon black in the crosslinked rubber is not particularly limited, and is, for example, in the range of 10 to 150 parts by mass per 100 parts by mass of the diene rubber, and preferably in the range of 30 to 120 parts by mass.

Further, the content ratio of carbon black in the crosslinked rubber is preferably 20 mass% or more, more preferably 30 mass% or more, and preferably 40 mass% or less, more preferably 35 mass% or less. When the content ratio of carbon black in the crosslinked rubber is 20 mass% or more, the amount of recoverable carbon black increases.

### -Other Components-

The crosslinked rubber may further contain, in addition to the above diene rubber and carbon black, various components commonly used in the rubber industry, such as rubber components other than diene rubber, fillers other than carbon black (silica, calcium carbonate, etc.), silane coupling agents, antioxidants, softeners, processing aids, resins, surfactants, organic acids (such as stearic acid), zinc oxide (zinc white), vulcanization accelerators, crosslinking agents (sulfur, peroxide, etc.), and the like.

### (Reaction Conditions, etc.)

The first decomposition step is carried out in a solvent. When the first decomposition step is carried out in a solvent, the crosslinked rubber swells due to the solvent. By decomposing the crosslinked rubber under solvent-swollen conditions, it is possible to suppress gasification and aromatization of the decomposition product, and, compared to conventional high-temperature thermal decomposition, to obtain a decomposition product (intermediate decomposition product: liquid polymer) with a higher retention rate of the skeleton of the constituent monomers of the diene rubber (isoprene skeleton, butadiene skeleton, etc.).

As the solvent for the first decomposition step, various solvents having the effect of swelling the crosslinked rubber can be used, and, for example, aromatic solvents, aliphatic solvents, alicyclic solvents, ethers, esters, and the like can be used. Examples of aromatic solvents include benzene, toluene, xylene, and the like; examples of aliphatic solvents include pentane, hexane, heptane, and the like; examples of alicyclic solvents include cyclopentane, cyclohexane, and the like; examples of ethers include tetrahydrofuran (THF), and the like; and examples of esters include ethyl acetate, butyl acetate, and the like. Among these, as the solvent for the first decomposition step, at least one selected from the group consisting of toluene, xylene, cyclohexane, and butyl acetate is preferred, with toluene being particularly preferred. When toluene, xylene, cyclohexane, or butyl acetate is used as the solvent for the first decomposition step, it is possible to obtain a decomposition product (intermediate decomposition product: liquid polymer) with a higher retention rate of the skeleton of the constituent monomers of the diene rubber (isoprene skeleton, butadiene skeleton, etc.).

The amount of the solvent used is preferably 1 mL or more, more preferably 5 mL or more, and preferably 500 mL or less, more preferably 200 mL or less, per 1 g of the crosslinked rubber. When the amount of the solvent used is 1 mL or more per 1 g of the crosslinked rubber, the decomposition reaction of the diene rubber in the crosslinked rubber proceeds further, and when the amount of the solvent used is 500 mL or less per 1 g of the crosslinked rubber, it is preferable from the viewpoint of cost.

The temperature of the first decomposition step is preferably 150°C to 300°C. By carrying out the first decomposition step at 150°C or higher, the decomposition reaction rate of the diene rubber in the crosslinked rubber is improved, and by carrying out the first decomposition step at 300°C or lower, it is possible to suppress gasification and aromatization of the decomposition product, and after decomposition, the retention rate (selectivity) of the skeleton of the constituent monomers of the diene rubber in the crosslinked rubber is improved. Further, for example, when the crosslinked rubber contains carbon black, it can be recovered and reused as high-quality carbon black. From the viewpoint of improving the decomposition reaction rate of the crosslinked rubber, the first decomposition step is preferably carried out at 160°C or higher, more preferably at 180°C or higher. From the viewpoint of improving the selectivity of the product retaining the monomer skeleton, the first decomposition step is preferably carried out at 280°C or lower, more preferably at 250°C or lower.

The decomposition time in the first decomposition step is not particularly limited. As an example, the decomposition time in the first decomposition step is preferably 1 hour to 48 hours, more preferably 3 hours to 18 hours. By carrying out the first decomposition step for 1 hour or more, the decomposition rate of the crosslinked rubber is improved. On the other hand, if the decomposition time is too long, the skeleton (double bonds, etc.) of the constituent monomers of the diene rubber may be decomposed, or the decomposition product may be gasified or aromatized, but by carrying out the first decomposition step for 48 hours or less, it is possible to suppress decomposition of the monomer skeleton and gasification or aromatization of the decomposition product, and after decomposition, the retention rate (selectivity) of the skeleton of the constituent monomers of the diene rubber in the crosslinked rubber is improved.

The first decomposition step is preferably carried out under an inert gas atmosphere. By carrying out the first decomposition step under an inert gas atmosphere, it is possible to reduce active species (oxygen, hydrogen, etc.) dissolved in the solvent and suppress oxidation or reduction of the decomposition product, and in particular, to suppress hydrogenation of double bonds in oligomers or monomers in the decomposition product. Further, when the crosslinked rubber contains carbon black, oxidation of the carbon black can also be suppressed. Examples of the inert gas include nitrogen, carbon dioxide, argon, helium, and the like.

To carry out the first decomposition step under an inert gas atmosphere, for example, when using a batch reactor, the atmosphere charged into the reactor may be an inert gas, and when using a flow reactor, the atmosphere flowing through the reactor may be an inert gas. Note that hydrogen may be generated during the first decomposition step, but the hydrogen generated is not considered as part of the atmosphere in the first decomposition step.

The first decomposition step can be carried out at any pressure, including under reduced pressure, at atmospheric pressure, or under increased pressure. As an example, the reaction pressure is preferably 1 kPa to 10 MPa, more preferably 10 kPa to 5 MPa, and even more preferably 50 kPa to 2 MPa.

The first decomposition step may be carried out with or without the use of a catalyst, but it is preferable not to use a catalyst. By not using a catalyst in the first decomposition step, costs can be reduced. When a catalyst is used, any catalyst having the effect of promoting the decomposition reaction of the crosslinked rubber can be used.

The first decomposition step may be carried out with or without the use of a decomposition aid, but it is preferable not to use a decomposition aid. By not using a decomposition aid in the first decomposition step, costs can be reduced. When a decomposition aid is used, any decomposition aid having the effect of promoting the decomposition reaction of the crosslinked rubber can be used.

### (Decomposition Product (Intermediate Decomposition Product: Liquid Polymer))

In the method for decomposing crosslinked rubber according to the present embodiment, a liquid polymer is obtained as a decomposition product by the first decomposition step.

Here, in the present specification, the term "liquid polymer" refers to a substance that is liquid at room temperature (23°C) and contains two or more diene-based monomer units.

The liquid polymer preferably has a weight-average molecular weight (Mw) of 500 to 300,000, and more preferably 1,000 to 250,000. When the weight-average molecular weight (Mw) is 500 or more, decomposition has not proceeded excessively, so the retention rate of the diene-based monomer skeleton can be easily set to 30 mass% or more. On the other hand, when the weight-average molecular weight (Mw) is 300,000 or less, decomposition has sufficiently proceeded, and when obtaining diene-based monomers from the liquid polymer by further decomposition, side reactions are less likely to proceed, and the yield of diene-based monomers is more likely to improve.

Note that, in the present specification, the weight-average molecular weight (Mw) can be measured by gel permeation chromatography (GPC).

It is preferable that the liquid polymer has a retention rate of the diene-based monomer skeleton of 30 mass% or more, more preferably 50 mass% or more, and even more preferably 70 mass% or more, based on the mass of the diene-based monomer skeleton of the diene rubber in the crosslinked rubber before decomposition. When the retention rate of the diene-based monomer skeleton is 70 mass% or more, further decomposition allows the diene-based monomer to be obtained from the liquid polymer at a high yield.

Note that, in the present specification, the retention rate of the diene-based monomer skeleton (such as isoprene skeleton, butadiene skeleton, etc.) is measured by ¹H-NMR.

As the diene-based monomer skeleton of the diene rubber, at least one selected from the group consisting of isoprene skeleton and butadiene skeleton is preferable. From a liquid polymer with a high retention rate of isoprene skeleton and/or butadiene skeleton, further decomposition allows diene-based monomers such as isoprene and butadiene, which are easily reusable, to be obtained at a high yield.

When the crosslinked rubber contains diene rubber including an isoprene skeleton, it is preferable that the retention rate of the isoprene skeleton is 30 mass% or more, based on the mass of the isoprene skeleton of the diene rubber in the crosslinked rubber before decomposition. From a liquid polymer with a high retention rate of the isoprene skeleton, further decomposition allows isoprene, which is easily reusable as a monomer, to be obtained at a high yield.

When the crosslinked rubber contains diene rubber including a butadiene skeleton, it is preferable that the retention rate of the butadiene skeleton is 30 mass% or more, based on the mass of the butadiene skeleton of the diene rubber in the crosslinked rubber before decomposition. From a liquid polymer with a high retention rate of the butadiene skeleton, further decomposition allows butadiene, which is easily reusable as a monomer, to be obtained at a high yield.

Further, when the crosslinked rubber contains carbon black together with diene rubber, a mixture of the liquid polymer and recovered carbon black can be obtained by passing through the first decomposition step. The recovered carbon black in the mixture can be collected and reused.

### <Second Decomposition Step>

The method for decomposing crosslinked rubber according to the present embodiment includes a second decomposition step in which the decomposition product obtained in the first decomposition step is further thermally decomposed at 600°C to 950°C under an inert gas atmosphere and in the absence of a catalyst.

### (Reaction Conditions, etc.)

By performing the second decomposition step at 600°C or higher, the decomposition reaction rate of the decomposition product obtained in the first decomposition step is greatly improved, the yield of monomers is greatly improved, and by performing the second decomposition step at 950°C or lower, gasification and aromatization of the decomposition product can be suppressed, and the selectivity for products maintaining the monomer skeleton is improved. From the viewpoint of improving the decomposition reaction rate and the monomer yield, it is preferable that the second decomposition step is performed at 700°C or higher. By performing the second decomposition step at 700°C to 900°C, it is possible to improve the decomposition reaction rate of the decomposition product obtained in the first decomposition step while also improving the selectivity for products maintaining the monomer skeleton.

The reaction time of the second decomposition step is not particularly limited. As an example, the reaction time of the second decomposition step is preferably 0.001 seconds to 1000 seconds, and more preferably 0.01 seconds to 1000 seconds.

In a preferred mode of the second decomposition step, the decomposition product obtained in the first decomposition step is heated under an inert gas atmosphere at a heating rate of 800°C/min or more from 100°C to 450°C, and then thermally decomposed at 600°C to 950°C. When the heating rate from 100°C to 450°C is 800°C/min or more, the generation of decomposition products with a higher molecular weight than diene-based monomers such as oligomers is suppressed, and after decomposition, the retention rate (selectivity) of the monomer skeletons constituting the decomposition product (liquid polymer) obtained in the first decomposition step is further improved, and the yield of diene-based monomers is further improved.

In another preferred mode of the second decomposition step, the decomposition product obtained in the first decomposition step is heated under an inert gas atmosphere at a heating rate of 2000°C/min or more from 100°C to 450°C, and then thermally decomposed at 600°C to 950°C. When the heating rate from 100°C to 450°C is 2000°C/min or more, the generation of decomposition products with a higher molecular weight than diene-based monomers such as oligomers is suppressed, and after decomposition, the retention rate (selectivity) of the monomer skeletons constituting the decomposition product (liquid polymer) obtained in the first decomposition step is further improved, and the yield of diene-based monomers is further improved.

In another preferred mode of the second decomposition step, the decomposition product obtained in the first decomposition step is heated under an inert gas atmosphere at a heating rate of 800°C/min or more from 100°C to 600°C, and then thermally decomposed at 650°C to 950°C. When the heating rate from 100°C to 600°C is 800°C/min or more, the generation of decomposition products with a higher molecular weight than diene-based monomers such as oligomers is suppressed, and after decomposition, the retention rate (selectivity) of the monomer skeletons constituting the decomposition product (liquid polymer) obtained in the first decomposition step is further improved, and the yield of diene-based monomers is further improved.

In another preferred mode of the second decomposition step, the decomposition product obtained in the first decomposition step is heated under an inert gas atmosphere at a heating rate of 2000°C/min or more from 100°C to 600°C, and then thermally decomposed at 650°C to 950°C. When the heating rate from 100°C to 600°C is 2000°C/min or more, the generation of decomposition products with a higher molecular weight than diene-based monomers such as oligomers is suppressed, and after decomposition, the retention rate (selectivity) of the monomer skeletons constituting the decomposition product (liquid polymer) obtained in the first decomposition step is further improved, and the yield of diene-based monomers is further improved.

In another preferred mode of the second decomposition step, the decomposition product obtained in the first decomposition step is mixed with a medium selected from fatty acid esters and hydrocarbons, and then thermally decomposed at 600°C to 950°C under an inert gas atmosphere and in the absence of a catalyst. By thermally decomposing after mixing the decomposition product obtained in the first decomposition step with a medium, the decomposition of the decomposition product (liquid polymer) obtained in the first decomposition step into diene-based monomers is promoted, and diene-based monomers can be obtained at a high yield.

The second decomposition step is performed under an inert gas atmosphere. By performing the second decomposition step under an inert gas atmosphere, oxidation and reduction of the decomposition product can be suppressed, and in particular, hydrogenation of double bonds in the monomers in the decomposition product can be suppressed. Here, examples of the inert gas include nitrogen, carbon dioxide, argon, helium, and the like.

To perform the second decomposition step under an inert gas atmosphere, for example, when using a batch reactor, it is sufficient to make the atmosphere in the reactor an inert gas, and when using a flow reactor, it is sufficient to make the atmosphere flowing through the reactor an inert gas. Note that hydrogen may be generated during the second decomposition step, but the generated hydrogen is not considered as part of the atmosphere in the second decomposition step.

The second decomposition step can be carried out at any pressure, and may be performed under reduced pressure, at atmospheric pressure, or under increased pressure, but it is preferable to perform it under reduced pressure or at atmospheric pressure. As an example, the reaction pressure in the second decomposition step is preferably 1000 kPa to 65 kPa. By performing the second decomposition step under reduced pressure or at atmospheric pressure, polymerization (repolymerization) of monomers in the decomposition product can be suppressed.

The second decomposition step is performed in the absence of a catalyst (that is, without using a catalyst). By not using a catalyst in the second decomposition step, costs can be reduced. Here, "in the absence of a catalyst" means that there is no catalyst having an effect of promoting the decomposition reaction in the reaction system of the second decomposition step.

### (Decomposition Product)

In the method for decomposing crosslinked rubber according to the present embodiment, monomers (particularly diene-based monomers) and the like can be obtained as decomposition products by the second decomposition step.

In the method for decomposing crosslinked rubber according to the present embodiment, it is preferable that the decomposition product obtained in the second decomposition step contains 15 mass% or more, more preferably 20 mass% or more, and even more preferably 25 mass% or more of hydrocarbon compounds having 5 or fewer carbon atoms and limonene (particularly, hydrocarbon compounds having 2 to 4 carbon atoms, isoprene, and limonene). By increasing the yield of hydrocarbon compounds having 5 or fewer carbon atoms and limonene (particularly, hydrocarbon compounds having 2 to 4 carbon atoms, isoprene, and limonene), the yield of reusable monomers is improved, and the economic and environmental value of the decomposition method is further enhanced. From the viewpoint of the yield of reusable monomers, it is even more preferable that the decomposition product obtained in the second decomposition step contains 40 mass% or more of hydrocarbon compounds having 5 or fewer carbon atoms.

Here, the total amount of hydrocarbon compounds having 5 or fewer carbon atoms and limonene (particularly, hydrocarbon compounds having 2 to 4 carbon atoms, isoprene, and limonene) in the decomposition product obtained in the second decomposition step may depend on the reaction apparatus used in addition to the above reaction conditions.

Further, the hydrocarbon compounds having 5 or fewer carbon atoms as the decomposition product vary depending on the type of diene rubber in the crosslinked rubber to be decomposed, but examples include 1,3-butadiene, isoprene, 1,3-pentadiene, 2,3-dimethyl-1,3-butadiene, and the like, with 1,3-butadiene and isoprene being preferable. The proportion of hydrocarbon compounds having 5 or fewer carbon atoms in the decomposition product can be controlled, for example, by the reaction conditions such as the reaction temperature and reaction time in the second decomposition step.

### <Others>

The method for decomposing crosslinked rubber according to the present embodiment may further include another step in addition to the above-described first decomposition step and second decomposition step. Such steps include, for example, a pretreatment step (such as a cutting step or pulverizing step) of the crosslinked rubber.

Further, when the crosslinked rubber contains carbon black, it is preferable to include a step of recovering carbon black from the decomposition product (intermediate decomposition product) between the first decomposition step and the second decomposition step.

The method for decomposing crosslinked rubber according to the present embodiment can be carried out using either a batch reactor or a flow reactor.

Further, the decomposition product after the decomposition reaction can be separated and recovered by filtration, distillation, centrifugation, or the like, or recovered by precipitation using a poor solvent, and then reused. In addition, the monomer (particularly, diene-based monomer) ultimately obtained from the crosslinked rubber can be reused as a raw material for diene rubber (polymer).

### EXAMPLES

The present invention will be described in more detail below with reference to examples, but the present invention is not limited in any way to the following examples.

### (1) Analysis Method for Retention Rate of Monomer Skeleton in Diene Rubber

The obtained decomposition product (liquid polymer) was analyzed using a nuclear magnetic resonance apparatus (product name: JNM-ECA-500, manufactured by JEOL Ltd.), and the retention rate of the isoprene skeleton and/or butadiene skeleton derived from natural rubber and/or butadiene rubber contained in each crosslinked rubber sample was calculated.

### (2) Analysis Method for Weight-Average Molecular Weight (Mw) of Liquid Polymer

The weight-average molecular weight (Mw) of the decomposition product (liquid polymer) in terms of polystyrene was determined by gel permeation chromatography (hereinafter, sometimes referred to as GPC analysis; delivery unit: LC-20AB manufactured by Shimadzu Corporation, column: combination of KF-803 and KF-804 manufactured by Showa Denko K.K. or combination of G2000HXL and G4000HXL manufactured by Tosoh Corporation, detector: RID-10A differential refractometer manufactured by Shimadzu Corporation, analysis system: LabSolutions manufactured by Shimadzu Corporation, eluent: tetrahydrofuran), using monodisperse standard polystyrene as a reference. The measurement temperature was 40°C.

### (Preparation of Crosslinked Rubber Sample A)

A rubber composition was prepared by compounding 50 parts by mass of carbon black, 1.0 part by mass of antioxidant 6PPD [N-phenyl-N'-(1,3-dimethylbutyl)-p-phenylenediamine], 2.0 parts by mass of stearic acid, 2.5 parts by mass of zinc oxide, 1.5 parts by mass of vulcanization accelerator (N-cyclohexyl-2-benzothiazolylsulfenamide), and 4.5 parts by mass of sulfur with 100 parts by mass of natural rubber, and the rubber composition was heat crosslinked to prepare crosslinked rubber. The obtained crosslinked rubber was cut into a shape of 3 mm × 3 mm × 2 mm to produce crosslinked rubber sample A.

### (Preparation of Crosslinked Rubber Sample B)

Except that 60 parts by mass of natural rubber and 40 parts by mass of butadiene rubber [product name: UBEPOL BR150L, manufactured by UBE Elastomer Co., Ltd.] were compounded instead of 100 parts by mass of natural rubber, crosslinked rubber sample B was produced in the same manner as crosslinked rubber sample A.

### (Preparation of Crosslinked Rubber Sample C)

Except that 40 parts by mass of natural rubber and 60 parts by mass of butadiene rubber [product name: UBEPOL BR150L, manufactured by UBE Elastomer Co., Ltd.] were compounded instead of 100 parts by mass of natural rubber, crosslinked rubber sample C was produced in the same manner as crosslinked rubber sample A.

### <Examples of First Decomposition Step>

### (Examples 1-1 to 1-7)

0.4 g of crosslinked rubber sample A and 4 mL of toluene were added to a reactor, and the mixture was stirred at 200°C or 240°C for 3 hours, 6 hours, 9 hours, or 18 hours under an Ar atmosphere to carry out the decomposition reaction. After the reaction, the mixture was separated into a solvent (toluene) soluble component and a solvent insoluble component. The solvent soluble component mainly consisted of liquid polymer, while the solvent insoluble component mainly consisted of carbon black.

¹H-NMR analysis was performed on the obtained solvent soluble component (liquid polymer) to calculate the retention rate of the diene-based monomer skeleton. In addition, the expected yield of diene-based monomer was calculated from the product of the yield of the liquid polymer and the retention rate of the diene-based monomer skeleton. Furthermore, the weight-average molecular weight (Mw) of the liquid polymer was analyzed by GPC analysis.

### (Examples 2-1 to 2-7)

Except that crosslinked rubber sample B was used as the decomposition target instead of crosslinked rubber sample A, the decomposition reaction was carried out in the same manner as in Examples 1-1 to 1-7, ¹H-NMR analysis was performed to calculate the retention rate of the diene-based monomer skeleton in the product, and the expected yield of diene-based monomer was further calculated. Furthermore, the weight-average molecular weight (Mw) of the liquid polymer was analyzed by GPC analysis.

### (Examples 3-1 to 3-8)

Except that crosslinked rubber sample C was used as the decomposition target instead of crosslinked rubber sample A, the decomposition reaction was carried out in the same manner as in Examples 1-1 to 1-7, ¹H-NMR analysis was performed to calculate the retention rate of the diene-based monomer skeleton in the product, and the expected yield of diene-based monomer was further calculated. Furthermore, the weight-average molecular weight (Mw) of the liquid polymer was analyzed by GPC analysis.

### (Examples 4-1 to 4-7)

Except that cyclohexane was used as the solvent instead of toluene, the decomposition reaction was carried out in the same manner as in Examples 1-1 to 1-7, ¹H-NMR analysis was performed to calculate the retention rate of the diene-based monomer skeleton in the product, and the expected yield of diene-based monomer was further calculated. Furthermore, the weight-average molecular weight (Mw) of the liquid polymer was analyzed by GPC analysis.

### (Examples 5-1 to 5-7)

Except that xylene was used as the solvent instead of toluene, the decomposition reaction was carried out in the same manner as in Examples 1-1 to 1-7, ¹H-NMR analysis was performed to calculate the retention rate of the diene-based monomer skeleton in the product, and the expected yield of diene-based monomer was further calculated. Furthermore, the weight-average molecular weight (Mw) of the liquid polymer was analyzed by GPC analysis.

### (Examples 6-1 to 6-2)

Except that butyl acetate was used as the solvent instead of toluene, the decomposition reaction was carried out in the same manner as in Examples 1-1 to 1-7, ¹H-NMR analysis was performed to calculate the retention rate of the diene-based monomer skeleton in the product, and the expected yield of diene-based monomer was further calculated. Furthermore, the weight-average molecular weight (Mw) of the liquid polymer was analyzed by GPC analysis.

The results of Examples 1-1 to 6-2 above are respectively presented in Tables 1 to 6.

| | | Example 1-1 | Example 1-2 | Example 1-3 | Example 1-4 | Example 1-5 | Example 1-6 | Example 1-7 |
|---|---|---|---|---|---|---|---|---|
| Decomposition Sample | - | Crosslinked Rubber Sample A (NR = 100 parts by mass) | | | | | | |
| Solvent | - | Toluene | | | | | | |
| Decomposition Temperature | °C | 200 | 200 | 200 | 240 | 240 | 240 | 240 |
| Decomposition Time | Hours | 3 | 9 | 18 | 3 | 6 | 9 | 18 |
| Liquid Polymer Yield | Mass% | 76.7 | 86.5 | 87.1 | 74.8 | 84.2 | 84 | 82.5 |
| Diene-based Monomer Skeleton Retention Rate | Mass% | 97.8 | 93.9 | 83.9 | 91.9 | 89.7 | 84.7 | 82.9 |
| Estimated Diene-based Monomer Yield | Mass% | 75 | 81.2 | 73.1 | 68.7 | 75.6 | 71.2 | 68.4 |
| Mw of Liquid Polymer | - | 250608 | 129238 | 54523 | 184522 | 82030 | 66599 | 48196 |

**[Table 2]**

| | | Example 2-1 | Example 2-2 | Example 2-3 | Example 2-4 | Example 2-5 | Example 2-6 | Example 2-7 |
|---|---|---|---|---|---|---|---|---|
| Decomposition Sample | - | Crosslinked Rubber Sample B (NR = 60 parts by mass, BR = 40 parts by mass) | | | | | | |
| Solvent | - | Toluene | | | | | | |
| Decomposition Temperature | °C | 200 | 200 | 200 | 200 | 240 | 240 | 240 |
| Decomposition Time | Hours | 3 | 6 | 9 | 18 | 3 | 9 | 18 |
| Liquid Polymer Yield | Mass% | 51.5 | 59.4 | 64.4 | 68.1 | 44 | 66.3 | 72.2 |
| Diene-based Monomer Skeleton Retention Rate | Mass% | 82.1 | 84.8 | 84.9 | 83 | 84.7 | 82.7 | 84.2 |
| Estimated Diene-based Monomer Yield | Mass% | 42.3 | 50.4 | 54.7 | 56.5 | 37.2 | 54.9 | 60.8 |
| Mw of Liquid Polymer | - | 233627 | 223622 | 182114 | 141362 | 197381 | 163485 | 147105 |

**[Table 3]**

| | | Example 3-1 | Example 3-2 | Example 3-3 | Example 3-4 | Example 3-5 | Example 3-6 | Example 3-7 | Example 3-8 |
|---|---|---|---|---|---|---|---|---|---|
| Decomposition Sample | - | Crosslinked Rubber Sample C (NR = 40 parts by mass, BR = 60 parts by mass) | | | | | | | |
| Solvent | - | Toluene | | | | | | | |
| Decomposition Temperature | °C | 200 | 200 | 200 | 200 | 240 | 240 | 240 | 240 |
| Decomposition Time | Hours | 3 | 6 | 9 | 18 | 3 | 6 | 9 | 18 |
| Liquid Polymer Yield | Mass% | 51 | 47.8 | 56.9 | 67.9 | 53.3 | 54.9 | 33.4 | 13.9 |
| Diene-based Monomer Skeleton Retention Rate | Mass% | 86.4 | 82.8 | 85.4 | 86.1 | 84.4 | 84.8 | 79.2 | 68.5 |
| Estimated Diene-based Monomer Yield | Mass% | 45.1 | 39.6 | 48.5 | 58.4 | 44.9 | 47.5 | 26.5 | 9.5 |
| Mw of Liquid Polymer | - | 248879 | 219132 | 194150 | 132738 | 271780 | 238136 | 83906 | 16947 |

**[Table 4]**

| | | Example 4-1 | Example 4-2 | Example 4-3 | Example 4-4 | Example 4-5 | Example 4-6 | Example 4-7 |
|---|---|---|---|---|---|---|---|---|
| Decomposition Sample | - | Crosslinked Rubber Sample A (NR = 100 parts by mass) | | | | | | |
| Solvent | - | Cyclohexane | | | | | | |
| Decomposition Temperature | °C | 200 | 200 | 200 | 200 | 240 | 240 | 240 |
| Decomposition Time | Hours | 3 | 6 | 9 | 18 | 3 | 9 | 18 |
| Liquid Polymer Yield | Mass% | 36 | 43.9 | 55.1 | 73.7 | 75.9 | 66.8 | 60.8 |
| Diene-based Monomer Skeleton Retention Rate | Mass% | 76 | 87.2 | 85 | 79.9 | 81.7 | 85.4 | 70.9 |
| Estimated Diene-based Monomer Yield | Mass% | 27.4 | 38.3 | 46.8 | 58.9 | 62 | 57.1 | 43.1 |
| Mw of Liquid Polymer | - | 211499 | 212488 | 157288 | 106383 | 125150 | 109061 | 105937 |

**[Table 5]**

| | | Example 5-1 | Example 5-2 | Example 5-3 | Example 5-4 | Example 5-5 | Example 5-6 | Example 5-7 |
|---|---|---|---|---|---|---|---|---|
| Decomposition Sample | - | Crosslinked Rubber Sample A (NR = 100 parts by mass) | | | | | | |
| Solvent | - | Xylene | | | | | | |
| Decomposition Temperature | °C | 200 | 200 | 200 | 200 | 240 | 240 | 240 |
| Decomposition Time | Hours | 3 | 6 | 9 | 18 | 6 | 9 | 18 |
| Liquid Polymer Yield | Mass% | 67 | 84.6 | 80.6 | 78.1 | 77.3 | 71.7 | 59.4 |
| Diene-based Monomer Skeleton Retention Rate | Mass% | 80.8 | 82 | 77.4 | 70.2 | 67.6 | 63.6 | 80 |
| Estimated Diene-based Monomer Yield | Mass% | 54.1 | 69.4 | 62.4 | 64.8 | 62.3 | 58.7 | 47.6 |
| Mw of Liquid Polymer | - | 210329 | 125356 | 167093 | 98944 | 70853 | 60111 | 78052 |

**[Table 6]**

| | | Example 6-1 | Example 6-2 |
|---|---|---|---|
| Decomposition Sample | - | Crosslinked Rubber Sample A (NR = 100 parts by mass) | |
| Solvent | - | Butyl acetate | |
| Decomposition Temperature | °C | 240 | 240 |
| Decomposition Time | Hours | 6 | 9 |
| Liquid Polymer Yield | Mass% | 79.2 | 78.3 |
| Diene-based Monomer Skeleton Retention Rate | Mass% | 79.5 | 79.9 |
| Estimated Diene-based Monomer Yield | Mass% | 63 | 62.5 |
| Mw of Liquid Polymer | - | 44105 | 42170 |

### <Examples of Second Decomposition Step>

### (Example 7)

A portion (3.0 mg) of the reaction mixture (reaction mixture obtained by concentrating under reduced pressure the filtrate obtained by filtering the reaction solution of Example 1-1 (first decomposition step)) is dissolved in 0.60 mL of tetrahydrofuran. A portion (5.0 µL) of this solution is placed in a stainless steel container, and the solvent is removed under reduced pressure. The reaction mixture (0.025 mg) of the first decomposition step obtained after solvent removal is heated to 700°C using a pyrolyzer (PY-3030D, manufactured by Frontier Laboratories Ltd.), and the resulting pyrolysis product is analyzed using a gas chromatograph-mass spectrometer and a gas chromatograph (GCMS-QP2010Plus and GC-2014, both manufactured by Shimadzu Corporation, both equipped with a capillary column UltraALLOY UA-1 manufactured by Frontier Laboratories Ltd.). The yields were estimated to be 34.8% for isoprene, 1.3% for limonene, 17.3% for hydrocarbons with 1 to 4 carbon atoms (including butadiene), and 38.8% for hydrocarbons with 5 to 10 carbon atoms (excluding isoprene and limonene).

### (Examples 8 to 11)

Except that the decomposition target and heating temperature are changed as indicated in Table 7, the pyrolysis reaction is carried out in the same manner as in Example 7, and the resulting pyrolysis products are analyzed using a gas chromatograph-mass spectrometer and a gas chromatograph, and the results were estimated.

| | | Example 7 | Example 8 | Example 9 | Example 10 | Example 11 |
|---|---|---|---|---|---|---|
| Decomposition Sample | - | Decomposition product of Example 1-1 | Decomposition product of Example 1-3 | Decomposition product of Example 1-5 | Decomposition product of Example 1-6 | Decomposition product of Example 1-7 |
| Heating Temperature | °C | 700 | 700 | 700 | 700 | 700 |
| Isoprene Yield | Mass% | 34.8 | 37.3 | 32.2 | 35 | 33.3 |
| Limonene Yield | Mass% | 1.3 | 1.4 | 1.2 | 1.3 | 1.3 |
| C1-C4 Yield *1 | Mass% | 17.3 | 18.7 | 16.1 | 17.5 | 16.6 |
| C5-C10 Yield *2 | Mass% | 38.8 | 41.6 | 36 | 39.1 | 37.1 |

| | | | | | | |
|---|---|---|---|---|---|---|
| *1 Yield of hydrocarbons with 1 to 4 carbon atoms (excluding butadiene) *2 Yield of hydrocarbons with 5 to 10 carbon atoms (excluding isoprene and limonene) | | | | | | |

From Table 7, it is predicted that, according to the method for decomposing crosslinked rubber of the present invention, diene-based monomers can be obtained at a high yield.

## Claims

1. A method for decomposing crosslinked rubber comprising:
a first decomposition step of decomposing crosslinked rubber containing diene rubber in a solvent; and
a second decomposition step of thermally decomposing a decomposition product obtained in the first decomposition step at 600°C to 950°C under an inert gas atmosphere and in the absence of a catalyst.

2. The method for decomposing crosslinked rubber according to claim 1, wherein the solvent in the first decomposition step is at least one selected from the group consisting of toluene, xylene, cyclohexane, and butyl acetate.

3. The method for decomposing crosslinked rubber according to claim 1, wherein a decomposition temperature in the first decomposition step is 150°C to 300°C.

4. The method for decomposing crosslinked rubber according to claim 1, wherein a decomposition time in the first decomposition step is 1 hour to 48 hours.
